# EUROPEAN PATENT SPECIFICATION

(11) **EP 1 536 695 B1**
(45) Date of publication and mention of the grant of the patent: **19.09.2007**
(21) Application number: 03792212.7
(22) Date of filing: 18.07.2003
(51) Int. Cl.: A23L 1/22, A23L 1/40

(54) **SAVOURY FOOD PRODUCT AND PROCESS FOR ITS PREPARATION**
PIKANTES LEBENSMITTEL UND PROZESS ZU SEINER HERSTELLUNG
PRODUIT ALIMENTAIRE SALE ET SON PROCEDE DE PREPARATION

(30) Priority: 20.08.2002 EP 02078434
(43) Date of publication of application: 08.06.2005
(73) Proprietor: UNILEVER N.V., 3013 AL Rotterdam (NL); UNILEVER PLC, London, Greater London EC4 4BQ (GB)
(72) Inventor: BASCH, Nicolas Henri Robert, 74074 Heilbronn (DE); MAIER, Dieter Kurt Karl, 74074 Heilbronn (DE); WEISBECKER, Rainer, 63619 Bad Orb (DE)
(74) Representative: Wurfbain, Gilles L.
(86) International application number: PCT/EP2003/007865
(87) International publication number: WO 2004/017762

(56) References cited:
- EP-A- 1 214 895
- WO-A-02/00039
- US-A- 5 846 580
- US-A- 5 958 502
- US-A- 6 090 419
- US-A- 6 126 979

## Description

### Field of the invention

The present invention relates to an edible solid providing a controlled and long lasting release of flavor and/or flavor top notes. The invention also relates to a process of preparing the solid and to food compositions comprising the solid.

### Background of the invention

Flavours are complex mixtures of multiple volatile chemical compounds having various boiling points and diffusion coefficients. People working in the flavour and perfume industry distinguish between basic notes and top notes of a perfume or a flavour. Basic notes are typically the least volatile components and are responsible for longer lasting sensation being noticed after hours or even days upon exposure. Top notes are usually the most volatile components of a perfume or flavour or aroma and are in most cases responsible for the flavour or aroma sensation noticed during the first seconds or minutes of exposure to the perfume or flavour or aroma.

The flavour sensation, which is, for example, experienced during comminuting herbs or spices or during heating some foodstuff (such as barbecueing or roasting) can be attributed to top notes. Top notes are therefore usually responsible for giving foods the typical characteristic flavour and/or aroma sensation associated with fresh food, freshly prepared or heated food.

In storable, prefabricated food products rapid release of flavour and/or aroma and particularly top notes during use and especially upon heating or cooking is a commonly experienced problem. For most food products, in particular dried savoury products, a rapid and complete release of the savoury top notes during the first seconds of using the food products, especially during cooking, is noted. For example, typical bouillon cubes display their savoury top notes within the first 20 seconds of use after which the top notes and the typical savoury flavour and/or aroma of the bouillon cube is no longer noticeable to the consumer.

United States Patent nr 6,090,419 discloses a salt composition containing: (a) 10-90 wt.% of NaCl; and (b) 10-90 wt.% of a binding matrix, in which said NaCl is distributed throughout said binding matrix and may be prepared by mixing and heating the NaCl with the binding matrix to form a melt and then extruding the melt.

Various encapsulation techniques have been developed, which have been reported to reduce or prevent the loss of flavours. An example is US 5,601,865, where a matrix-based encapsulation technique for flavours and other volatiles is described, which prevents loss of volatile material through oxidative degradation and molecular reactions. A melt is prepared of encapsulant and encapsulate upon which the melt is cooled and pressed to form a dense amorphous matrix. A wide range of compounds are named that can be used in the preparation of the matrix comprising such as sugar, starches, other carbohydrates and gums .

WO 00/25606 reports a solid delivery system for the release of aroma ingredients, comprising an extrusion formed matrix containing an effective amount of a substantially hydrophilic aroma material. The matrix composition is based on the use of common polymeric saccharides and their derivatives. The composition is reported to be suitable for the use in food products wherein the active aroma ingredients are advantageously retained throughout the matrix and become more resistant to moisture degradation and oxidation.

These documents teach how the problems of loss and degradation of volatile components, such as flavours, upon storage can be overcome . However, there is still a need for a product suitable to be used in food products, especially savoury and/or dried food products, which substantially releases its typical flavour and/or aroma and particularly its top notes during an extended period of time upon usage, e.g. consumption or preparation of the food, and not already during the very first seconds of its use. An even greater need exists for a product that provides an extended and long lasting release of such flavour and/or aroma and/or topnotes also at temperatures greater than room temperature, particularly around boiling temperature. Also desired is a product which allows the controlled release of flavour and/or aroma and/or top notes, i.e. a product that can be designed such that it releases a flavour and/or aroma and/or a top note at/over a given time and/or a given temperature. Furthermore, if to be accepted by consumers such an edible product needs to have acceptable stability, storability, pleasant appearance and should be easy to handle and to use.

### Summary of the invention

It has now been found that the above objectives can be met at least in part by a savoury particle comprising:
- 0.1-80% (wt) salt and/or MSG (preferably 1-60%)
- 20-99% (wt) of one or more sugars and/or polyols (preferably 30-80%),
- 0.05-50% (wt) of a flavouring ingredient,
which particle is in a glassy state and which particle has a volume of at least 2 ml, or alternatively at least 0.5 ml in case the sugars and/or polyols comprise trehalose.

It was found that the particles according to the invention could gradually disperse their flavouring ingredients into the environment over the time such particle desintegrates or dissolves upon usage, e.g. when dilluted with water or when added to an aqueous dish. Without wishing to be bound by theory, it is believed that the particles according to the invention dissolve slowly (e.g. 1-10 minutes in hot or boiling water) due to slowly dissolving sugars and/or polyols. It will be understood that the larger the particle, the more time it will take to dissolve or disintegrate. Next to the size, the type of sugars and/or polyols and amounts influence dissolution time. Hence, for a slow release of the flavouring ingredients a certain minimum size will be required. As the particles according to the invention can have any shape (preferably not leafy shapes or straw-like shape, which due to a large surface area may dissolve quickly), the size of the particles according to the invention can be expressed as volume of the particle. Depending upon the dissolution time desired, said particles preferably have a volume of at least 2 ml*,* or alternatively at least 0.5 ml in case the sugars and/or polyols comprise trehalose.

"Glassy state" is herein to be understood as preferably non-deformable when a particle according to the invention is squeezed by hand (contrary to e.g. normal bouillon cubes which deform as a paste or crumble when squeezed by hand); glass-like appearance; preferably transparent or translucent; film-like non-grainy surface; one object not composed of other elements pressed together.

In the above and throughout the text "flavouring ingredient" is herein to be understood as to comprise flavours, aromas, top notes and the individual components thereof. "Flavouring ingredients" herein do not relate to salt and monosodium glutamate (MSG): these components are in the composition but under a separate header (to provide the savoury character: i.e. a salty, hearty or umami taste or flavour).

In the above the sugars and/or polyols preferably comprise one or more of sucrose, glucose, glucose syrup, saccharose, lactose, levulose, fructose, maltose, ribose, dextrose, isomalt, sorbitol, mannitol, xylitol, lactitol, maltitol, pentatol, arabinose, pentose, xylose, galactose, trehalose, dextrose, maltodextrin or combinations thereof. More preferred are non-sweet tasting sugars and polyols. Particularly preferred is trehalose.

The advantages of the particles according to the invention are particularly desired for the particle being a bouillon-, broth-, soup- or seasoning particle (e.g. bouillon cube).

The above particles can be prepared by a process comprising the steps of:
(a) providing a mixture of melted or dissolved sugar(s) and/or polyols with the salt and/or MSG,
(b) adding the flavouring ingredients to said mixture and mix,
(c) cooling the mixture to solidify.

In the above process it may be preferred that the sugars and/or polyols under (a) comprise 1-50% water or moisture, based on the total weight of the sugars and polyols.

In order to obtain shaped particles according to the invention, it is possible (prior to or during the cooling step (c)) to cast the mixture in moulds having a volume of at least 2 ml, or alternatively at least 0.5 ml in case the sugars and or polyols comprise trehalose, prior to solidification. An alternative shaping technique is to manufacture a bigger solid mass first by cooling, wherein the solid mixture is broken up in particles having a volume of at least 2 ml, or alternatively at least 0.5 ml in case the sugars and or polyols comprise trehalose.

By using a particle with a composition as described above it is possible to create a product which dissolution time and also flavouring ingredient release can be controlled and designed. An advantage of the present invention is therefore that it provides an edible compound having an extended and long lasting release of flavouring ingredient when consuming it. Another advantage of the present invention is that it provides a product having a delayed and/or long lasting release of flavouring ingredient during the preparation of food products - even during cooking or boiling. A further advantage of he present invention is that it provides a product, which has a controlled dissolution time and/or a controlled flavouring ingredient release. Thus products according to the invention can be designed such that they can release their flavouring ingredient at a given time and/or at a given temperature. Another advantage of the invention is that it provides a solid, edible product having the properties described above in a shaped form, which allows easy handling and storage as compared to crumbling or soft food products or powders. A further advantage of the invention is that it provides an edible solid which can be transparent or opaque, is of pleasant appearance and which is not prone to substantially undergo Maillard reactions, undesired browning and prone to developing off-flavours.

### Detailed Description of the Invention

Any percentages given herein are weight percentages (% wt.) unless stated otherwise. The weight percentages (% wt.) are based on the weight of the savoury particle unless stated otherwise.

Object of the present invention is a flavouring ingredient (e.g. flavour top notes)-releasing solid. Flavouring ingredients are usually complex chemical mixtures of varying composition depending on the origin of the flavouring ingredients or the methods of generating the flavouring ingredients, for example heating processes and/or chemical reactions. In general, all flavouring ingredients (pleasant or unpleasant ones) can be used in the present invention but pleasant, in particular pleasant food flavouring ingredients are preferred, and in particular savoury flavouring ingredients.

Suitable flavouring ingredients in the present invention are the flavouring ingredients of, associated with, or generated by, fresh or freshly comminuted herbs or spices. Also preferred are the flavouring ingredients of, or associated with, heated, cooked, fried, braised, roasted foodstuff and the flavouring ingredients being generated by heating, cooking, braising, frying or roasting meat and/or vegetables such as for example chicken, porc, beef, mushrooms, onions, garlic, aubergines, celery, celeriac. It may be preferred that the flavouring ingredient comprises a Maillard flavour.

More preferably, the particle according to the invention releases the top notes of the flavouring ingredients described above. The top notes of a flavour are the most volatile components of that flavour. Top notes in the meaning as used herein may comprise individual volatile chemical compounds as well as mixtures of chemical compounds of a given flavour. The top notes of a flavour can be defined as the flavour sensation of a given flavour ingredient which is noticed by a person or panel during the first 10 seconds.

Flavouring ingredients according to the invention can be ingredients which impart, deliver or generate (for example upon heat treatment or upon reaction with other ingredients) one or more of the flavours described above. Examples of flavouring ingredients in this context are, for example, natural as well as chemically synthesised flavouring ingredients, flavour mixes, chicken flavours, beef flavours, roasted meat flavours, barbecued meat flavours, vegetable flavours, herbs and spices, herb- and spice extracts, and/or mixtures thereof.

The particle according to the invention may comprise from 0.1 to 50 % wt., preferably from 5 to 35% wt. and more preferably from 10 to 25 % wt. of flavouring ingredients.

The invention provides a flavouring ingredients (incl. flavour top notes)-releasing particle, which, when added to boiling water, still releases a flavouring ingredient 5, preferably 10, up to e.g. 15 minutes after its addition to the boiling water. The flavouring ingredient-release can e.g. be determined by a panel, judging whether substantially the same flavour sensation is noticed at a given period (e.g. 5, preferably 10, up to e.g. 15 minutes after the addition of the solid to boiling water) as was noticed 10 seconds after the solid had been added to the boiling water.

As the particles according to the invention need to have a certain minimum size (e.g. as expressed as a minimum volume of the particle), and as the particles need to have a flavouring ingredient which is mixed with sugars and/or polyols, the present invention thus provides a flavour releasing (incl. flavour top notes), edible particle having three dimensions of which preferably the first is greater than 0.5 cm, the second greater than 0.5 cm and the third is greater than 0.5 cm, the solid comprising one or more flavour ingredients, 0.1 to 50% wt. of one or more edible alkali metal chlorides (e.g. salt) and/or MSG and a matrix, which comprises one or more carbohydrates (e.g. sugars and/or polyols), said particle, when added to boiling water, still releases the flavouring ingredient (incl. top notes) after a period of 5 minutes upon its addition to the boiling water.

The particles according to the invention can be used as such (e.g. as a bouillon or broth cube, or as a candy-type snack food having a savoury flavour instead of the usual fruity flavours), or be used as part of a food product or food composition. Thus, in a further aspect the present invention provides a food composition comprising one or more of the particles above.

The invention can be seen as flavour ingredients being incorporated in a carbohydrate (preferably sugars and/or polyols) matrix. Any edible carbohydrate that can be readily processed is a suitable matrix material according to the invention. Carbohydrates that can be used in processes using extruders are preferred. Sugars and/or polyols are preferred carbohydrates. Examples of suitable carbohydrates according to the invention are sugars or sugar derivatives and include, for example, sucrose, glucose, glucose syrup, saccharose, lactose, levulose, fructose, maltose, ribose, dextrose, isomalt, sorbitol, mannitol, xylitol, lactitol, maltitol, pentatol, arabinose, pentose, xylose, galactose, trehalose, starch, hydrogenated starch, hydrogenated starch hydrolysates, dextrose, maltodextrin and/or edible derivatives or combinations thereof.

The carbohydrates may also be mixed with other suitable ingredients such as, for example, proteins or gums to form the matrix material. A particularly preferred matrix material is trehalose. Preferably, the matrix material does not have a strong sweet taste and does not undergo Maillard reactions. The matrix may further comprise plasticisers. A plasticiser is an edible solvent, such as water, oil, low melting fat or alcohol. Plasticisers may be added to facilitate preparation, handling and processing of the edible solid.

The particle according to the invention preferably comprises from more than 20 to up to 99 % wt., more preferably, 30 to 80 and most preferably 40 to 65 % wt. of the carbohydrate matrix (preferably sugars and/or polyols). While the matrix is preferably amorphous the solid itself may contain crystals or crystallised material.

Preferably, the particle according to the invention has three dimensions of which the first dimension is greater than 1.0, more preferably greater than 1.5cm and most preferably greater than 2.0 cm. The second dimension of the solid is preferably greater than 1.0 cm and more preferably greater than 1.5 cm. The third dimension is preferably greater than 0.7 and more preferably greater than 1.0 cm.

The particle according to the invention may be of symmetric or non-symmetric shape and may be, for example, a cube, tablet, briquette, pellet, ellipsoid, a sphere, torus, pyramid, parallelpiped, cylinder, ball, ring, triangle, or tetraeder.

The particle according to the invention may be opaque, transparent or non-transparent. The particle preferably is water soluble or dispersible in water in the temperature range from room temperature (25°C) to boiling temperature (100°C). The particle according to the invention is preferably slowly dissolving in boiling water. Slowly dissolving as used herein means that 3 minutes, preferably 5, more preferably 10 minutes after adding the solid to boiling water less than 50 % vol., based on the volume of the solid have dissolved.
By modifying dimension and geometry of the solid, its dissolution properties can be influenced, and the flavour release over time can be controlled.

Preferably, the particle according to the invention is macroscopically non-porous wherein macroscopically is herein understood to mean visible to the naked eye. The particle may have a density of from 0.5 to 5.0 g/cm³, preferably the density is greater than 1 and lower than 2.5 g/cm³.

The particle according to the invention may have a water activity from 0.05 to 0.45, preferably from 0.1 to 0.3.. Preferably the particle is dry which means it comprises less than 50 % wt. preferably less than 30 % wt., more preferably less than 15% wt. of water.

The particle may further comprise edible oil or fat. Preferably the particle comprises less than 30 % wt., more preferably less than 15 % wt. and most preferably less than 10 % wt. of edible oil or fat. As some of the flavouring ingredients may be essential oils or dissolved in oil, it is likely the particles according to the invention comprise at least 0.1 %wt of oil or fat.

The particle according to the invention preferably comprises 0.1 % wt. to 50 % wt., preferably from 1.0 to 30 % wt. and more preferably from 2.0 to 20 % wt. of edible alkali metal chlorides, such as, for example sodium or potassium chloride. The solid may also comprise other edible salts.

The particle according to the invention may further comprise, preferably from 0.01 to 15 % wt., more preferably from 0.5 to 5 % wt., pepper. Other suitable ingredients of the particle may be, preferably in an amount from 0.1 to 20 % wt., of colourants, emulsifiers, vitamins, nutrients, antioxidants, preservatives or mixtures thereof. The particle may further comprise, preferably from 0.1 up to 35% wt., more preferably 5 to 25 %wt., meat, meat extracts, protein, hydrolised protein, vegetable matter, plant extracts, yeast extracts and/or mixtures thereof.

The invention also pertains to food products comprising the particles according to the invention. Suitable food products include, for example, sauces, sauce concentrates, instant sauces, soup concentrates, soup bases, instant soups, bouillon cubes, snacks, dried meals, frozen meals, instant meals, confectionary products having a predominantly savoury taste, and/or sweets having a predominantly savoury taste. Preferred products are dry food products and instant food products, wherein an instant food product is a composition, which is ready to be consumed (shortly) upon the addition of boiling water. Although food products are preferred, the particle according to the invention may as well be used in other compositions where a slow release of flavour may be desired, such as for example in personal care products like washing powder, soaps, bathing soaps, bath salts or oils, or shampoos.

An embodiment of the solid according to the invention is a stock cube wherein the term "cube" is not meant to limit the shape of the product to cubes. Stock "cubes" can also have other shapes than just cubes. Another embodiment of the solid according to the invention is a bonbon having a savoury taste and/or flavour.

A further embodiment of the composition is a particle according to the invention having a transparent matrix comprising trehalose.

The invention also pertains to a process for preparing the particles according to the invention, wherein the matrix is prepared by blending or mixing the carbohydrate(s)(preferably sugars and/or polyols) making up the matrix material. One or more plasticisers may be added. The mix is brought to melting while avoiding temperatures or conditions at which the mix may burn or caramelise. Melting may be carried out *in vacuo* if lower temperatures are required. Part or all of the flavour ingredients is incorporated in the carbohydrate matrix. This can be carried out by adding the flavour ingredients to the melt and by blending them with the carbohydrates prior to melting, or both. Other ingredients may be added to the melt or they may be added to the carbohydrates before the latter are brought to melting. Whether ingredients are added to the melt or to the carbohydrate(s) prior to the melting step depends on the heat-stability of the ingredients. If the ingredients are heat-sensitive use of reduced pressure may be applied, or the ingredients are added to the melt shortly before the melt is cooled down. The melt is cooled down to solidify in order to be shaped. This can be carried out by extrusion, using dies or nozzles having suitable diameter and shape, or simply by cutting the solidified material at the desired length. Alternatively, the melt may be poured into moulds. Once solidified the particles are packed, preferably air-tight and free of moisture.

### EXAMPLES

### Example 1:

### Preparation of flavour releasing bouillon cubes

The bouillon cubes were prepared by mixing together 210 g matrix material, 70 g water, 60 g salt and 31 g monosodiumglutamate.
As matrix material were used:
A) 35 g dextrose, 140 g maltodextrin, 35 g dried glucose syrup
B) 210 g trehalose
C) 210 g saccharose

The mixtures A,B,C were heated under stirring to 140°C. When foam formation stopped the stirring was stopped, too. The sides of the reaction vessel were wiped clean to avoid caramelisation. The mixtures were continued to be heated until they reached a temperature of 146°C upon which they were allowed to cool down to a temperature of 125°C. 66 g chicken flavour (ex IFF, which includes chicken top notes), 6 g pepper, 35 g dried vegetable extracts were added to A, B and C under stirring. The resulting mixtures were poured into molds having a size of 2 cm length, 2 cm depth and 2 cm width (as used for preparing ice cubes), i.e. a volume of 8 ml, upon which the molds were cooled in a refrigerator. When hardened, the cubes were packed airtight in cellophane foil and stored.

### Example 2: Flavour release.

The flavour release of cubes of example 1 B (having a volume of 8 ml and size of 2cm x 2cm x 2cm) was compared with the flavour release of samples having the same composition and being prepared in the same way but which were ground to a particle size of around 2 mm.

Several cubes were prepared according to example 1 B. One half of these cubes were used as obtained while the other half were ground and passed through a 2 mm sieve. The resulting powders contained particles of a size of less than 2mm. The powders were collected to portions having the same weight as the non ground cubes, i.e. the cubes having a size of 2cm x 2cm x 2cm. Cubes and powder were added without stirring to vessels containing 1 L of boiling water. After 10 seconds a panel of 5 people took note of the flavour sensation above the boiling water. After boiling for 6 minutes the mixtures were stirred and the panel take another note of the flavour sensation over the solutions.

While no flavour was noticed over the solutions to which the powder had been added, the same flavour sensation as the one noticed after 10 seconds was still noticed over the solutions to which the cubes had been added.

## Claims

1. Savoury particle comprising:
- 0.1-80% (wt) salt and/or MSG,
- 20-99% (wt) of one or more sugars and/or polyols,
- 0.05-50% (wt) of a flavouring ingredient,
which particle is in a glassy state and which particle has a volume of at least 2 ml.

2. Particle according to claim 1, which particle is a bouillon-, broth-, soup- or seasoning particle.

3. Particle according to claim 1-2, wherein the sugars and/or polyols comprise one or more of sucrose, glucose, glucose syrup, saccharose, lactose, levulose, fructose, maltose, ribose, dextrose, isomalt, sorbitol, mannitol, xylitol, lactitol, maltitol, pentatol, arabinose, pentose, xylose, galactose, trehalose, dextrose, maltodextrin or combinations thereof.

4. savoury particle comprising:
- 0.1-80% (wt) salt and/or MSG,
- 20-99% (wt) of one or more sugars and/or polyols,
- 0.05-50% (wt) of a flavouring ingredient,
which particle is in a glassy state and which particle has a volume of at least 0.5 ml, wherein the sugars and/or polyols comprise trehalose.

5. particle according to claim 1-4, which particle is a bouillon-, broth-, soup- or seasoning particle.

6. Particle according to claim 1-5, wherein the flavouring ingredient is a savoury flavouring ingredient.

7. Particle according to claim 6 wherein the flavouring ingredient is selected from the flavours of, associated with or generated by freshly comminuted herbs and spices, cooked, boiled, braised, fried or roasted meat and/or vegetables and mixtures thereof.

8. Particle according to claim 1-7, wherein the flavouring ingredient is a Maillard flavour.

9. Particle according to claim 1-8, having a water activity Of from 0.01 to 0.45.

10. Particle according to claim 1-9, further comprising 0.1-30% (wt) of an oil or fat.

11. Particle according to claim 1-10, in the form of a cube, tablet, briquette, pellet, ellipsoid, a sphere torus, pyramid, parallelpiped, cylinder, ball, ring, triangle, or tetraeder.

12. Food product comprising one or more particles of any one of the preceding claims.

13. Food product according to claim 12 wherein the food product is one of the following: instant meals, instant soups, soup concentrates, bouillon cubes, sauce concentrates, snacks, savoury confectionery products, savoury bonbons.

14. A process for preparing a particle according to claim 1-11, the process comprising the steps of:
(a) providing a mixture of melted or dissolved sugar(s) and/or polyols with the salt and/or MSG
(b) adding the flavouring ingredients to said mixture and mix
(c) cooling the mixture to solidify.

15. Process according to claim 14, wherein the sugars and/or polyols under (a) comprise 1-50% water, based on the total weight of the sugars and polyols.

16. Process according to claim 14-15, wherein prior to or during the cooling step (c) the mixture is cast in moulds having a volume of at least 0.5 ml prior to solidification.

17. Process according to claim 14-16, wherein the solid mixture is broken up in particles having a volume of at least 0.5 ml.

18. Use of a savoury particle comprising:
- 0.1-80% (wt) salt and/or MSG,
- 20-99% (wt) of one or more sugars and/or polyols,
- 0.05-50% (wt) of a flavouring ingredient,
which particle is in a glassy state and which particle has a volume of at least 2 ml, for making a bouillon, broth or soup.

19. Use according to claim 18, wherein the sugars and/or polyols of the particle comprise one or more of sucrose, glucose, glucose syrup, saccharose, lactose, levulose, fructose, maltose, ribose, dextrose, isomalt, sorbitol, mannitol, xylitol, lactitol, maltitol, pentatol, arabinose, pentose, xylose, galactose, trehalose, dextrose, maltodextrin or combinations thereof.

20. Use according to claim 18-19, wherein the flavouring ingredient of the particle is selected from the flavours of, associated with or generated by freshly comminuted herbs and spices, cooked, boiled, braised, fried or roasted meat and/or vegetables and mixtures thereof.

21. Use according to claim 18-20 wherein the flavouring ingredient of the particle is a Maillard flavour.

22. Use according to claim 18-21, wherein the particle has a water activity of from 0.01 to 0.45.

23. Use according to claim 18-22, wherein the particle is in the form of a cube, tablet, briquette, pellet, ellipsoid, a sphere, torus, pyramid, parallelpiped, cylinder, ball, ring, triangle, or tetraeder.

## Patentansprüche

1. Gewürzpartikel umfassend:
- 0,1-80 (Gew.)-% Salz und/oder MSG,
- 20-99 (Gew.)-% einer oder mehrerer Zucker und/oder Polyole,
- 0,05-50 (Gew.)-% eines Aromaingrediens,
wobei der Partikel in einem glasigen Zustand ist und ein Volumen von zumindest 2 ml hat.

2. Partikel nach Anspruch 1, wobei der Partikel ein Bouillon-Brüh-, Suppen- oder Würzpartikel ist.

3. Partikel nach Anspruch 1 bis 2, wobei die Zucker und/oder Polyole eines oder mehrere von Sucrose, Glucose, Glucosesirup, Saccharose, Laktose, Levulose, Fructose, Maltosen, Ribosen, Dextrose, Isomalte, Sorbitol, Mannitol, Xylitol, Lactitol, Maltitol, Pentatol, Arabinose, Pentose, Xylose, Galactose, Trehalose, Maltodextrin, oder Kombinationen davon, umfassen.

4. Gewürzpartikel umfassend:
- 0,1-80 (Gew.)-% Salz und/oder MSG,
- 20-99 (Gew.)-% einer oder mehrerer Zucker und/oder Polyole,
- 0,05-50 (Gew.)-% eines Aromaingrediens,
wobei der Partikel in einem glasigen Zustand ist und ein Volumen von zumindest 0,5 ml hat, wobei die Zucker und/oder Polyole Trehalose umfassen.

5. Partikel nach den Ansprüchen 1 bis 4, wobei der Partikel ein Bouillon-, Brüh-, Suppen- oder Würzpartikel ist.

6. Partikel nach den Ansprüchen 1 bis 5, wobei das Aromaingrediens ein Würz-Aromaingrediens ist.

7. Partikel nach Anspruch 6, wobei das Aromaingrediens ausgewählt ist aus Aromastoffen, die von frisch zerkleinerten Kräutern und Gewürzen, gekochtem, gesiedetem, geschmortem, gebratenem oder geröstetem Fleisch und/oder Gemüsen und Mischungen davon stammen, damit verbunden oder von diesen erzeugt sind.

8. Partikel nach den Ansprüchen 1 bis 7, wobei das Aromaingrediens ein Maillard-Aroma ist.

9. Partikel nach den Ansprüchen 1 bis 8 mit einer Wasseraktivität von 0,01 bis 0,45.

10. Partikel nach den Ansprüchen 1 bis 9, weiters umfassend 0,1 bis 30 (Gew.)-% eines Öls oder Fettes,

11. Partikel nach den Ansprüchen 1 bis 10, in der Form eines Würfels, einer Tablette, eines Briketts, eines Pellets, eines Ellipsoids, einer Kugel, eines Torus, einer Pyramide, eines Parallelepipeds, eines Zylinders, eines Balls, eines Rings, eines Dreiecks oder eines Tetraeders.

12. Nahrungsprodukt umfassend einen oder mehrere Partikel gemäß einem der vorangegangenen Ansprüche.

13. Nahrungsprodukt nach Anspruch 12, wobei das Nahrungsprodukt eines der folgenden ist: Instantmahlzeiten, Instantsuppen, Suppenkonzentrate, Bouillonwürfel, Saucenkonzentrate, Snacks, würzige Konfektprodukte, würzige Bonbons.

14. Verfahren zur Herstellung eines Partikels nach den Ansprüchen 1 bis 11, wobei das Verfahren die Schritte umfasst:
(a) Bereitstellen einer Mischung von geschmolzenem(n) oder aufgelöstem(n) 2ucker(n) und/oder Polyolen mit dem Salz und/oder MSG
(b) zugeben der Aromaingredientien zu dieser Mischung und Mischen
(c) Abkühlen der Mischung zum Verfestigen.

15. Verfahren nach Anspruch 14, wobei die Zucker und/oder Polyole bei (a) 1-50 % Wasser umfassen, basierend auf dem Gesamtgewicht der Zucker und polyole.

16. Verfahren nach den Ansprüchen 14 bis 15, wobei vor dem oder während des Kühlungsschritts (c) die Mischung bevor dem Verfestigen in Formen mit einem Volumen von mindestens 0,5 ml gegossen wird.

17. verfahren nach den Ansprüchen 14 bis 16, wobei die feste Mischung in Partikel gebrochen wird, die ein Volumen von mindestens 0,5 ml haben.

18. Verwendung eines Würzpartikels umfassend:
- 0,1-80 (Gew.)-% Salz und/oder MSG,
- 20-99 (Gew.)-% einer oder mehrerer Zucker und/oder Polyole,
- 0,05-50 (Gew-)-% eines Aromaingrediens,
wobei der Partikel in einem glasigen Zustand ist und ein Volumen von zumindest 2 ml hat, zur Herstellung einer Bouillon, Brühe oder Suppe.

19. Verwendung nach Anspruch 18, wobei die Zucker und/oder Poylole des Partikels eines oder mehrere von Sucrose, Glucose, Glucosesirup, Saccharose, Laktose, Levulose, Fructose, Maltosen, Ribcsen, Dextrose, Isomalte, Sorbitol, Mannitol, Xylitol, Lacrizel, Maltitol, Pentatol, Arabinose, Pentose, xylose, Galactose, Trehalose, Maltodextrin, oder Kombinationen davon, umfassen.

20. Verwendung nach den Ansprüchen 18 bis 19, wobei das Aromaingrediens des Partikels ausgewählt ist aus Aromastoffen, die von frisch zerkleinerten Kräutern und Gewürzen, gekochtem, gesiedetem, geschmortem, gebratenem oder geröstetem Fleisch und/oder Gemüsen und Mischungen davon stammen, damit verbunden oder von dieser, erzeugt sind.

21. Verwendung nach den Ansprüchen 18 bis 20, wobei das Aromaingrediens des Partikels ein Maillard-Aroma ist.

22. Verwendung nach den Ansprüchen 18 bis 21, wobei der Partikel eine Wasseraktivität von 0,01 bis 0,45 hat.

23. Verwendung nach den Ansprüchen 18 bis 22, wobei der Partikel die Form eines Würfels, einer Tablette, eines Briketts, eines Pellets, eines Ellipsoids, einer Kugel, eines Torus, einer Pyramide, eines Parallelepipeds, eines Zylinders, eines Balls, eines Rings, eines Dreiecks oder eines Tetraeders hat.

## Revendications

1. Particule salée comprenant :
- 0,1 - 80 % (en poids) de sel et/ou de glutamate de monosodium,
- 20-99 % (en poids) d'un ou de plusieurs sucres et/ou polyols,
- 0,05-50 % (en poids) d'un ingrédient de flaveur,
ladite particule étant dans un état vitreux et ladite particule ayant un volume d'au moins 2 ml.

2. Particule selon la revendication 1, ladite particule étant une particule de bouillon, de consommé, de soupe ou d'assaisonnement.

3. Particule selon les revendications 1 - 2, dans laquelle les sucres et/ou les polyols comprennent un ou plusieurs des composants suivants : saccharose, glucose, sirop de glucose, saccharose, lactose, lévulose, fructose, maltose, ribose, dextrose, isomalt, sorbitol, mannitol, xylitol, lactitol, maltitol, pentatol, arabinose, pentose, xylose, galactose, tréhalose, dextrose, maltodextrine ou des combinaisons de ceux-ci.

4. Particule salée comprenant :
- 0,1 - 80 % (en poids) de sel et/ou de glutamate de monosodium,
- 20 - 99 % (en poids) d'un ou de plusieurs sucres et/ou polyols,
- 0,05 - 50 % (en poids) d'un ingrédient de flaveur
ladite particule étant dans un état vitreux et ladite particule ayant un volume d'au moins 0,5 ml, où les sucres et/ou les polyols comprennent du tréhalose,

5. Particule selon les revendications 1 - 4, dans laquelle la particule est une particule de bouillon, de consommé, de soupe ou d'assaisonnement.

6. particule selon les revendications 1 - 5, dans laquelle l'ingrédient de flaveur est un ingrédient de flaveur salé.

7. Particule selon la revendication 6, dans laquelle l'ingrédient de flaveur est choisi parmi les flaveurs de, associées à ou générée par des fines herbes et des épices fraîchement broyés, de la viande et/ou des légumes cuits, bouillis, braisés ou rôtis et des mélanges de ceux-ci.

8. Particule selon les revendications 1-7, dans laquelle l'ingrédient de flaveur est une flaveur de Maillard.

9. Particule selon les revendications 1-8, ayant une activité de l'eau de 0,01 à 0,45.

10. Particule selon les revendications 1-9, comprenant en outre 0,1 - 30 % (en poids) d'une huile ou d'une graisse.

11. Particule selon les revendications 1-10, sous la forme d'un cube, d'une tablette, d'une briquette, d'une pastille, d'une ellipse, d'une sphère, d'un tore, d'une pyramide, d'un parallélépipède, d'un cylindre, d'une boule, d'un anneau, d'un triangle ou d'un tétraèdre.

12. Produit alimentaire comprenant une ou plusieurs particules selon l'une quelconque des revendications précédentes.

13. Produit alimentaire selon la revendications 12, dans laquelle le produit alimentaire est l'un de ceux qui suivent : repas instantanés, soupes instantanées, concentrés de soupes, bouillons cubes, concentrés de sauces, en-cas, produits de confiserie salés, bonbons salés.

14. Procédé de préparation d'une particule selon les revendications 1-11, ledit procédé comprenant les étapes consistant à :
a) fournir un mélange de sucres et/ou de polyols fondus ou dissouts avec le sel et/ou le glutamate de monosodium ;
b) ajouter les ingrédients de flaveur audit mélange et mélanger ;
c) refroidir le mélange pour qu'il se solidifie.

15. Procédé selon la revendication 14, dans lequel les sucres et/ou les polyols de l'étape (a) comprennent 1-50 % d'eau, sur la base du poids total des sucres et des polyols.

16. Procédé selon les revendications 14-15, dans lequel, avant ou pendant l'étape de refroidissement (c), le mélange est coulé dans des moules ayant un volume d'au moins 0,5 ml avant la solidification.

17. Procédé selon les revendications 14-16, dans lequel le mélange solide est cassé en particules ayant un volume d'au moins 0,5 ml.

18. Utilisation d'une particule salée comprenant :
- 0,1 - 80 % (en poids) de sel et/ou de glutamate de monosodium ;
- 20 - 99 % (en poids) d'un ou de plusieurs sucres et/ou polyols,
- 0,05 - 50 % (en poids) d'un ingrédient de flaveur,
ladite particule étant dans un état vitreux et ladite particule ayant un volume d'au moins 2 ml, pour fabriquer un bouillon, un consommé ou une soupe.

19. Utilisation selon la revendication 18, dans laquelle les sucres et/ou les polyols de la particule comprennent un ou plusieurs des composés suivants : saccharose, glucose, sirop de glucose, saccharose, lactose, lévulose, fructose, maltose, ribose, dextrose, isomalt, sorbitol, mannitol, xylitol, lactitol, maltitol, pentatol, arabinose, pentose, xylose, galactose, tréhalose, dextrose, maltodextrine ou combinaisons de ceux-ci.

20. Utilisation selon les revendications 18-19, dans laquelle l'ingrédient de flaveur de la particule est choisi parmi les flaveurs de, associées à ou générées par : les fines herbes et les épices fraîchement broyés, la viande et/ou les légumes cuits, bouillis, braisés, frits ou rôtis, et les mélanges de ceux-ci.

21. Utilisation selon les revendications 18-20, dans laquelle l'ingrédient de flaveur de la particule est une flaveur de Maillard.

22. Utilisation selon les revendications 18-21, dans laquelle la particule a une activité de l'eau de 0,01 à 0,45.

23. Utilisation selon les revendications 18-22, dans laquelle la particule est sous la forme d'un cube, d'une tablette, d'une briquette, d'une pastille, d'une ellipse, d'une sphère, d'un tore, d'une pyramide, d'un parallélépipède, d'un cylindre, d'une boule, d'un anneau, d'un triangle ou d'un tétraèdre.
